# EUROPEAN PATENT SPECIFICATION

(11) **EP 1 997 985 B1**
(45) Date of publication and mention of the grant of the patent: **12.04.2017**
(21) Application number: 08009789.2
(22) Date of filing: 29.05.2008
(51) Int. Cl.: E05B 53/00, E05C 3/16, E05C 3/30, E05B 79/20, E05C 3/12, E05B 81/24, E05B 83/36

(54) **Door with door opening device for heavy construction equipment**
Tür mit Türöffnungsvorrichtung für schweres Baugerät
Porte avec dispositif d'ouverture de porte pour équipement de construction lourd

(30) Priority: 30.05.2007 KR 20070052775
(43) Date of publication of application: 03.12.2008
(73) Proprietor: Volvo Construction Equipment Holding Sweden AB, 631 85 Eskilstuna (SE)
(72) Inventor: Jeong, Kyu Cheon, Changwon-si Gyeongsangnam-do (KR)
(74) Representative: Dr. Weitzel & Partner

(56) References cited:
- EP-A1- 0 100 855
- DE-U1- 29 503 953
- JP-U- S 608 430
- US-A- 5 662 369

## Description

### CROSS-REFERENCE TO RELATED APPLICATION

This application is based on and claims priority from Korean Patent Application No. 10-2007-0052775, filed on May 30, 2007 in the Korean Intellectual Property Office, the disclosure of which is incorporated herein in its entirety by reference.

### BACKGROUND OF THE INVENTION

### Field of the invention

The present invention relates to a door opening device for heavy construction equipment, and more particularly, to a door opening device for heavy construction equipment with an improved remote operation, which enables a user to smoothly perform a latch locking/releasing operation even in a state that the user is far apart from a door panel and a latch housing in order to open/close a door attached to the heavy construction equipment, and thus improves user's convenience and safety.

### Description of the Prior Art

Generally, in heavy construction equipment, such as an excavator, a loader, a fork lift, and the like, various kinds of doors, such as a cab door, a side door, a bonnet/hood, a tool box door, and the like, are installed, and in order to open/close such doors, door opening devices using latches are separately provided in the heavy construction equipment.

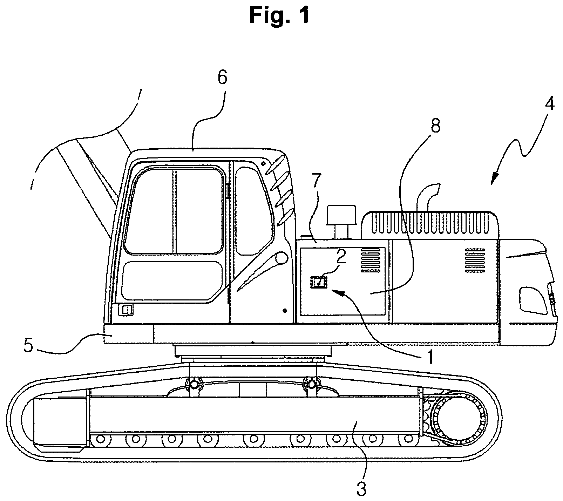

FIG. 1 is a schematic view explaining a mount state of a conventional door operating device installed in a side door for heavy construction equipment. Typically, an upper swing structure 4 is installed on an upper part of a lower driving structure 3, and a door panel 8 provided with a door opening/closing lever 2 is installed on one side of a body 7 formed in the rear of a cab 6. Also, in order to open/close the door, a latch housing 1 provided with a latch member is provided inside the center of the door panel 8.

Conventionally, the door is closed when the latch member provided in the latch housing 1 is locked into a hook member provided on the body or on one side of the body, while the door is opened when the latch member being locked into the hook member is released through pulling of the door opening/closing lever formed in front of the door panel 8.

According to the conventional door opening device, however, since the installation position of the latch housing differs in accordance with the height of the upper swing structure or the body, a user should manipulate the lever formed in front of the door panel whenever the user opens or closes the door, and thus the user should manipulate the lever in an unstable posture to meet the position of the lever.

Conventionally, since the heavy construction equipment is large-sized in comparison to general vehicles, the positions of the latch housing and the lever installed to open/close the door is set to be high above the ground, and thus a separate platform should be installed on the lower end of the door in order for the user to manipulate the lever in a convenient posture.

If the platform is not installed, the user should hang on to the body or have an unstable posture in order to manipulate the lever or open/close the door, and this may cause a safety accident.

On the other hand, in the case where the assembly of the latch member, the latch housing, and the lever attached to the door panel is partially installed on the upper or lower part of the door without proper design or consideration of the platform, the user may be in a good posture when he/she manipulates the lever, but the load or the center of gravity of the door may lean to the upper or lower part of the door, and this may cause an unstable opening/closing of the door.

EP 0 100 855 A1 discloses a remote control device with a Bowden cable used to operate two separate mechanisms, whereby the Bowden cable pulls a latch member rotating about an axis.

DE 295 03 953 U1 and JP S60 8430 U also disclose latch mechanisms with Bowden cables pulling a latch member.

US 5 662 369 A discloses a device for collapsing a backrest of a backseat of a car using a Bowden cable for pulling a latch member.

### SUMMARY OF THE INVENTION

Accordingly, the present invention has been made to solve the above-mentioned problems occurring in the prior art while advantages achieved by the prior art are maintained intact.

One object of the present invention is to provide a door with a door opening device for heavy construction equipment, which enables a user to perform a latch locking/releasing operation even in a state that the user is far apart from a door panel and a latch housing in order to open/close a door, and thus improves user's manipulability and safety.

In order to accomplish these objects, there is provided a door with a door opening device for heavy construction equipment provided with a latch member rotating in a latch housing installed on one side of a door panel of the door , according to the present invention, which includes a latch control lever having a hinge part elastically supported on one side of an upper frame or a lower frame of a door, a handle extending from one side of the hinge part, and a yoke formed on the other side of the hinge part, the latch control lever forming a traction force on the yoke when the handle is rotated about the hinge part by an external force; a rotary shaft shaft-engaged with the latch member and having a swing part formed to extend to an outer side of the latch member, the rotary shaft rotating in a body with the latch member so that the latch member is released by the traction force of the latch control lever; and a traction cable having one end fixed to the yoke of the latch control lever and the other end connected to the swing part of the rotary shaft.

The door according to an embodiment of the present invention may further include a traction unit for fixing the traction cable to the swing part.

The door according to an embodiment of the present invention may further include an eccentric fixing pin formed on the hinge part, and a first elastic member fixedly installed on the eccentric fixing pin to elastically support the latch control lever.

The swing part of the rotary shaft may be formed to project from a shaft line C of the latch member in an "L" shape so that the swing part forms a swing radius R that is apart from the shaft line C of the latch member.

The door according to an embodiment of the present invention may further include a support bracket installed on one side of the latch housing to set a fixing position of the traction cable.

### BRIEF DESCRIPTION OF THE DRAWINGS

The above and other objects, features and advantages of the present invention will be more apparent from the following detailed description taken in conjunction with the accompanying drawings, in which:
FIG. 1 is a schematic view explaining a mount state of a conventional door operating device installed in a side door for heavy construction equipment;
FIG. 2 is a schematic view explaining a mount state of a door opening device for heavy construction equipment according to an embodiment of the present invention;
FIG. 3 is a schematic view illustrating the construction of a door opening device for heavy construction equipment according to an embodiment of the present invention;
FIGS. 4A and 4B are views explaining an operation state of a latch control lever as illustrated in FIG. 3, wherein FIG. 4A is a view illustrating the construction of the latch control lever, and FIG. 4B is a view explaining the operation state of the latch control lever;
FIGS. 5A to 5C are views explaining an operation state of a latch housing as illustrated in FIG. 3, wherein FIG. 5A is a perspective view schematically illustrating the assemble state of the latch housing, FIG. 5B is a rear view of the latch housing, and FIG. 5C is a plan view of the latch housing; and
FIG. 6 is a schematic view explaining a mount state of a door opening device for heavy construction equipment according to another embodiment of the present invention.

### DETAILED DESCRIPTION OF THE PREFERRED EMBODIMENTS

Hereinafter, a preferred embodiment of the present invention will be described with reference to the accompanying drawings. The matters defined in the description, such as the detailed construction and elements, are nothing but specific details provided to assist those of ordinary skill in the art in a comprehensive understanding of the invention, and thus the present invention is not limited thereto.

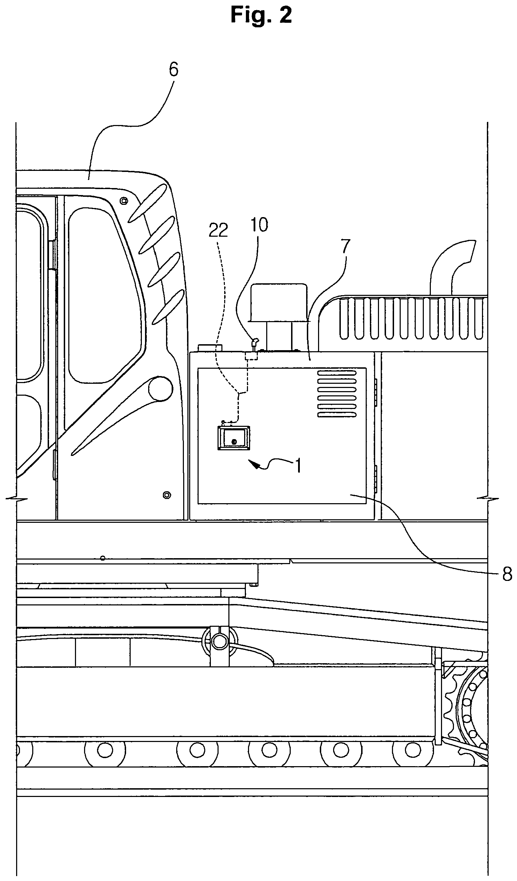

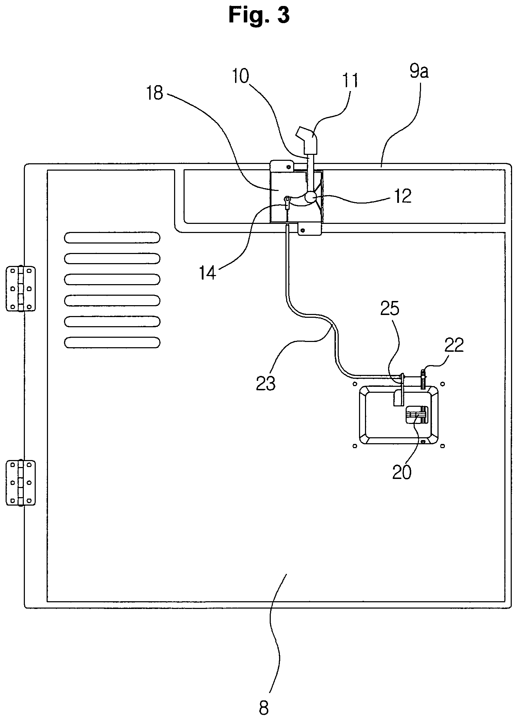

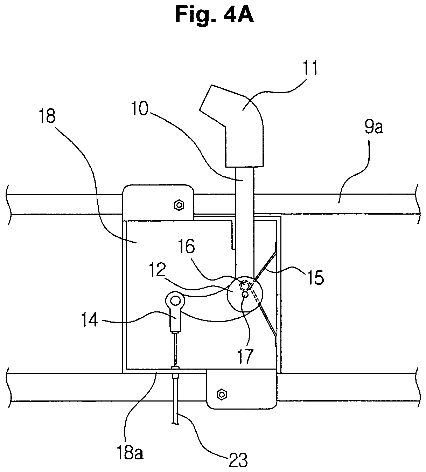

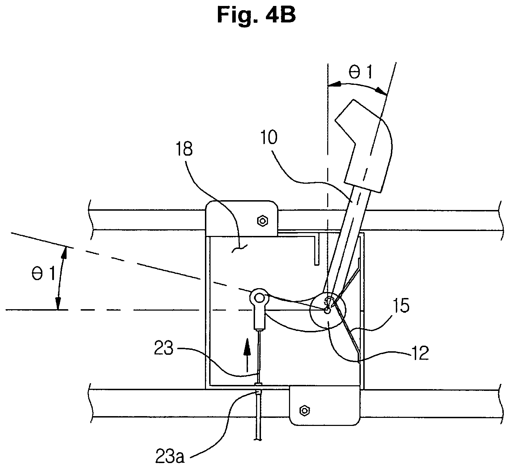

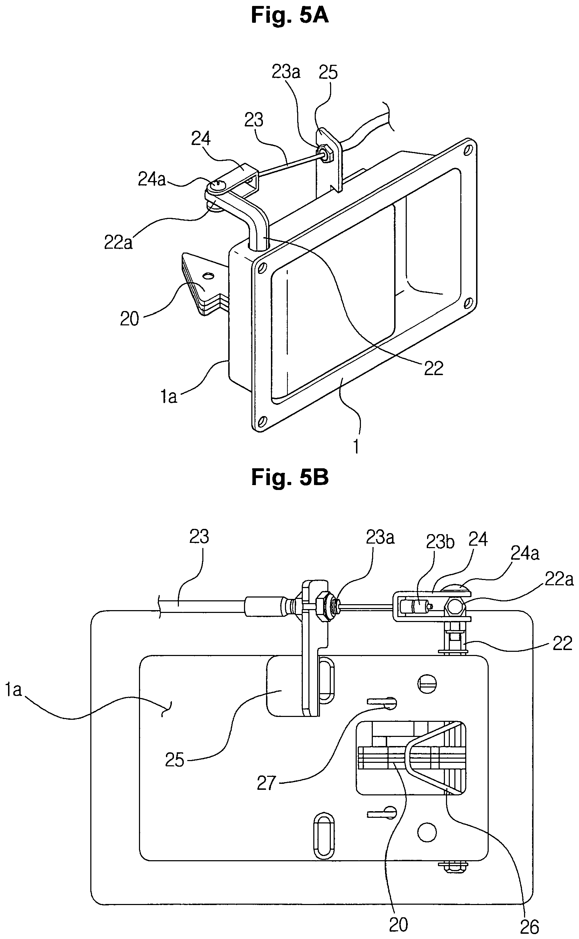

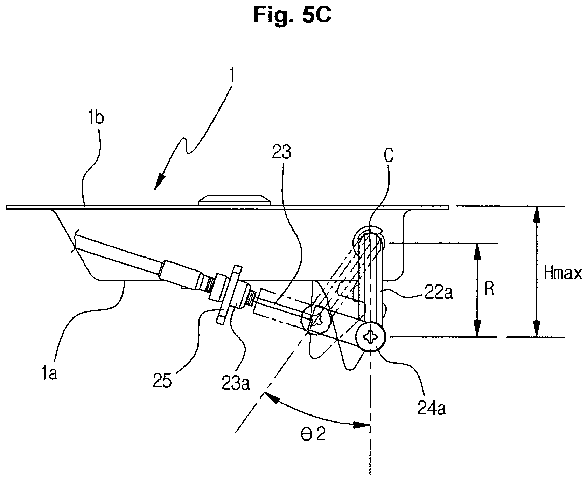

FIG. 2 is a schematic view explaining a mount state of a door opening device for heavy construction equipment according to an embodiment of the present invention, and FIG. 3 is a schematic view illustrating the construction of a door opening device for heavy construction equipment according to an embodiment of the present invention. FIGS. 4A and 4B are views explaining an operation state of a latch control lever as illustrated in FIG. 3, wherein FIG. 4A is a view illustrating the construction of the latch control lever, and FIG. 4B is a view explaining the operation state of the latch control lever. FIGS. 5A to 5C are views explaining an operation state of a latch housing as illustrated in FIG. 3, wherein FIG. 5A is a perspective view schematically illustrating the assemble state of the latch housing, FIG. 5B is a rear view of the latch housing, and FIG. 5C is a plan view of the latch housing.

In the description of the present invention, the reference numeral 1 denotes a latch housing, 10 denotes a latch control lever, and 12 denotes a hinge part of the latch control lever. The reference numeral 14 denotes a yoke, 20 denotes a latch member, 22 denotes a rotary shaft, and 23 denotes a traction cable. The reference numeral 24 denotes a traction unit, 25 denotes a support bracket for fixing the cable to a rear surface of the latch housing, and 26 denotes a second elastic member for elastically supporting the latch member.

The door opening device for heavy construction equipment according to an embodiment of the present invention facilitates the release of the latch through the latch control lever, and is provided with the latch member 20 rotating in the latch housing 1 installed on one side of a door panel 8 of the heavy construction equipment.

The door opening device for heavy construction equipment according to an embodiment of the present invention includes the latch control lever 10 having the hinge part 12 elastically supported on one side of an upper frame or a lower frame of a door, a handle 11 extending from one side of the hinge part 12, and the yoke 14 formed on the other side of the hinge part 12, the latch control lever 10 forming a traction force on the yoke 14 when the handle 11 is rotated about the hinge part 12 by an external force; the rotary shaft 22 shaft-engaged with the latch member 20 and having a swing part 22a formed to extend to an outer side of the latch member 20, the rotary shaft 22 rotating in a body with the latch member 20 so that the latch member 20 is released by the traction force of the latch control lever 10; and the traction cable 23 having one end fixed to the yoke 14 of the latch control lever 10 and the other end connected to the swing part 22a of the rotary shaft 22.

The door opening device according to an embodiment of the present invention further includes the traction unit 24 for fixing the traction cable 23 to the swing part 22a.

The door opening device according to an embodiment of the present invention may further include an eccentric fixing pin 16, formed on the hinge part 12, and a hinge pin 17, fastened adjacent to the eccentric fixing pin 16.

In an embodiment of the present invention, as illustrated in FIG. 4B, the hinge pin 17 rotatively fixes the hinge part 12 to one side of the upper frame 9a of the door that forms the outer wall of the door panel 8.

On the eccentric fixing pin 16, a first elastic member 15 for elastically supporting the latch control lever 10 is fixedly installed. The first elastic member 15 serves to elastically restore the latch control lever 10 to its initial position when an external force that is applied to the handle 11 moving in a specified rotation angle range θ1 is released.

On the other hand, when the external force is applied to the handle 11, the latch control lever 10 moves clockwise or counterclockwise about the hinge pin 17 in the specified rotation angle range θ1, and the yoke 14 also moves in the same manner about the hinge pin 17. In this case, the rotation angle range θ1 for the displacement of the latch control lever can be predetermined based on the amount of eccentricity and distance of the eccentric fixing pin 16.

In an embodiment of the present invention, in the case where the latch control lever 10 is installed on one side of the upper frame 9a of the door, as illustrated in FIG. 4A, a lever bracket 18 is installed in advance on one side of the upper frame 9a of the door, and the hinge part 12 of the latch control lever 10 is rotatably mounted inside the lever bracket 18. Also, as illustrated in FIG. 4B, a cable supporter 23a is mounted on a support plate 18a formed on the lower part of the lever bracket 18, and in order to transfer the traction force, a front end of the traction cable 23 is fixed to the yoke 14 that moves about the hinge pin 17.

Although not illustrated in the drawing, in the case of installing the latch control lever in the lower frame 9b of the door, the lever bracket 18 and the latch control lever 10 may be installed on one side of the lower frame 9b of the door.

On the other hand, as illustrated in FIGS. 5A to 5C, the swing part 22a of the rotary shaft 22 forms a swing radius R, being apart from the shaft line C of the latch member 20, and preferably, the swing part 22a is formed in an "L" shape, being apart from the shaft line C of the latch part 20, so that the swing part 22a forms a specified swing angle θ2.

On one side of the latch housing 1, a support bracket 25 for setting a fixing position of the traction cable 23 is installed.

When the support bracket 25 is installed, the other front end of the traction cable 23 fixed to the yoke 14 is supported by the cable supporter 23a and the support bracket 25, and fixed to the traction unit 24. The traction unit 24 is rotatably fixed to one side of the swing part 22a of the rotary shaft 22 by the fixing pin 24a.

In this case, it is preferable that the fixing position of the traction cable 23 extending from the front surface 1b of the latch housing 1 to the cable supporter 23a is set to be lower than the maximum swing height Hmax formed by the swing radius R of the swing part 22a that is projected from the rotary shaft 22, and it will be apparent to those skilled in the art that, according to circumstances, the fixing position of the traction cable 23 may be set to be inside the swing radius R in consideration of the swing angle θ2.

In an embodiment of the present invention, a second elastic member 26 is installed to elastically support the latch member 20 connected to the swing part 22 so that the latch member 20 is restored when the traction force that is applied to the traction unit 24 and the swing part 22a of the rotary shaft 22 is released, and the second elastic member 26 is inserted into a support hole 27 formed on the rear surface 1a of the latch housing 1 to support the latch member 20 in a direction against the traction force.

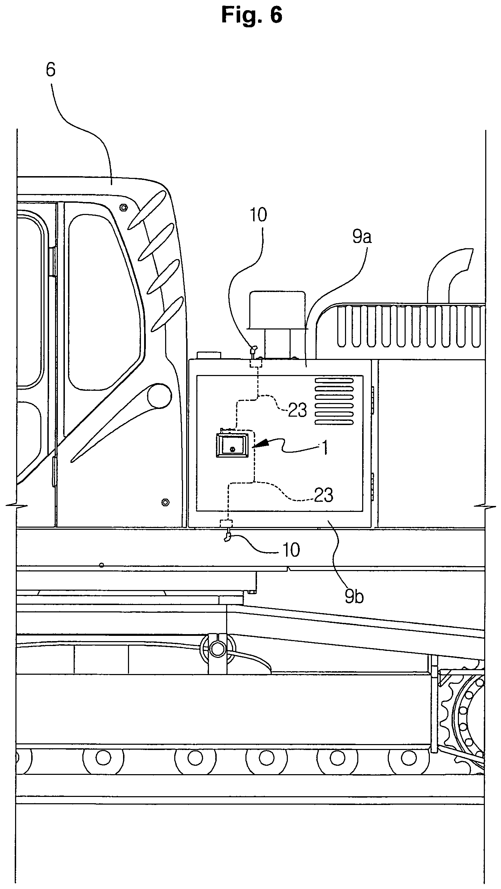

In another embodiment of the present invention, as illustrated in FIG. 6, the latch control lever 10 may be installed on the lower frame 9b of the door so that the latch control lever 10 can be manipulated through the lower part of the door in a position of the latch housing 1. That is, the manipulation position of the latch control lever 10 is lowered in consideration of the user's accessibility and safety, and it will be apparent to those skilled in the art that the latch control lever 10 may be positioned on a side frame of the body 7.

In modified embodiments of the present invention, the yoke 14 extending from the hinge part 12 may be separated and engaged with another hinge. In this case, the rotary shaft 22 and the swing part 22a connected to the rotary shaft 22 are rotated and swung through the traction cable 23 fixed to the yoke 14, respectively, by the user's manipulation of the latch control lever 10, i.e., the user's pulling or pushing of the handle 11, and thus the locking/releasing of the latch member 20 becomes possible.

In the embodiment of the present invention, a key manipulation part and a door opening lever may be formed on the front surface 1b of the latch housing 1. Since this feature is the same as the conventional door opening device, the detailed description thereof will be omitted.

Hereinafter, the effects of the door opening device for heavy construction equipment according to the embodiments of the present invention will be described with reference to the accompanying drawings.

According to the door opening device for heavy construction equipment according to the present invention, even if the assembly of the latch housing 1 and the latch member 20 closes the door panel 8, the user can manipulate the latch control lever 10 installed on one side of the upper frame 9a or the lower frame 9b of the door which can be easily accessed by the user in order to open the door.

If the user pulls or pushes the handle 11 to open the door, the latch control lever 10 and the hinge part 12 are rotated clockwise or counterclockwise in a predetermined rotation angle range θ1 to rotate the yoke (See FIG. 4B).

That is, by the external force applied to the latch control lever 10 installed on the door frame, the yoke 14 formed on one side of the hinge part 12 is rotated clockwise in a specified angle range θ1, for example, in the range of about 20°, and one side of the traction cable 23 is pulled corresponding to the rotation of the yoke 12.

In this case, as illustrated in FIGS. 5A to 5C, the traction cable 23 supported by the support bracket 25 and the cable supporter 23a provided on the latch housing 1 of the door panel 8 slides to pull the traction unit 24 and the swing part 22a.

Also, the swing part 22a, the rotary shaft 22, and the latch member 20 fixed in a body with the rotary shaft 22 are rotated clockwise about the shaft line C at a predetermined rotation angle θ2, for example, at about 30°.

Accordingly, by the rotation of the swing part 22a and the rotary shaft 22, the latch member 20 typically secedes or is released from the locked hook member to open the door.

On the other hand, if the door is released from its locking state by the rotation of the rotary shaft 22 and the latch member 20, i.e., the external force being applied by the user to the handle 11 of the latch control lever 10 is released, the hinge part 12 is rotated counterclockwise by the elastic force of the first elastic member 15 fixed to the eccentric fixing pin 16, and thus the latch control lever 10 and the yoke 14 are restored to their initial positions. At this time, the latch member 20 is also restored to its initial position in the same manner by the elastic force of the second elastic member 26 supported by one side of the latch housing 1.

Accordingly, the user can easily open the door in a stable posture by releasing the locking state of the latch member 20 that closes the door through simple manipulation of the latch control lever 10 even in a state that the user is far apart from the latch member and the latch housing 1 formed on the door panel 8.

On the other hand, if an external force is lightly applied from the front surface 1b of the latch housing 1 to the door panel 8 after the user finishes necessary work, the door is closed again by the locking operation of the hook member (not illustrated) screw-engaged with the latch member 20 in the same manner as the conventional door opening device.

In another embodiment of the present invention, as illustrated in FIG. 6, the latch control lever 10 is provided on the lower frame 9b of the door. Since the same operation is performed in this embodiment, the detailed description thereof will be omitted.

As described above, according to the door opening device for heavy construction equipment according to the present invention, the door can be easily opened using the traction force of the latch control lever on the upper part or the lower part of the door that can be easily accessed even if the assembly of the latch housing and the latch member closes the door on the door panel, and thus the user's manipulability and safety can be improved.

Although preferred embodiments of the present invention have been described for illustrative purposes, those skilled in the art will appreciate that various modifications, additions and substitutions are possible, without departing from the scope and spirit of the invention as disclosed in the accompanying claims.

## Claims

1. A door with a door opening device for heavy construction equipment provided with a latch member (20) rotating in a latch housing (1) installed on one side of a door panel (8) of the door, the door opening device comprising:
a latch control lever (10) having a hinge part (12) elastically supported on one side of an upper frame or a lower frame of the door, a handle (11) extending from one side of the hinge part (12), and a yoke (14) formed on the other side of the hinge part (12), the latch control lever (10) forming a traction force on the yoke (14) when the handle (11) is rotated about the hinge part (12) by an external force;
a rotary shaft (22) shaft-engaged with the latch member (20) and having a swing part (22a) formed to extend to an outer side of the latch member (20), the rotary shaft (22) rotating in a body with the latch member (20) so that the latch member (20) is released by the traction force of the latch control lever (10); and
a traction cable (23) having one end fixed to the yoke (14) of the latch control lever (10) and the other end connected to the swing part (22a) of the rotary shaft (22).

2. The door of claim 1, further comprising a traction unit (24) for fixing the traction cable (23) to the swing part (22a).

3. The door of claim 1, further comprising:
an eccentric fixing pin (16) formed on the hinge part (12); and
a first elastic member (15) fixedly installed on the eccentric fixing pin (16) to elastically support the latch control lever (10).

4. The door of claim 1, wherein the swing part (22a) of the rotary shaft (22) is formed to project from the shaft line (c) of the latch member (20) in an "L" shape, so that the swing part (22a) forms a swing radius (R) that is apart from a shaft line (c) of the latch member (20).

5. The door of claim 1, further comprising a support bracket (25) installed on one side of the latch housing (1) to set a fixing position of the traction cable (23).

## Patentansprüche

1. Tür mit einer Türöffnungsvorrichtung für schweres Baugerät, die mit einem Klinkenelement (20) versehen ist, das in sich in einem Klinkengehäuse (1) dreht, das an einer Seite eines Türblechs (8) der Tür angebracht ist, wobei die Türöffnungsvorrichtung Folgendes umfasst:
einen Klinkensteuerungshebel (10), der ein Scharnierteil (12) aufweist, das elastisch an einer Seite eines oberen Rahmens oder eines unteren Rahmens der Tür gehalten wird, wobei sich ein Griff (11) ausgehend von einer Seite des Scharnierteils (12) erstreckt und ein Joch (14) an der anderen Seite des Scharnierteils (12) gebildet ist, wobei der Klinkensteuerungshebel (10) eine Zugkraft auf das Joch (14) ausübt, wenn der Griff (11) durch eine externe Kraft um das Scharnierteil (12) gedreht wird;
eine Drehwelle (22), die sich in Welleneingriff mit dem Klinkenelement (20) befindet und ein Schwingteil (22a) aufweist, das derart ausgebildet ist, dass es sich zu einer Außenseite des Klinkenelements (20) hin erstreckt, wobei sich die Drehwelle (22) einstückig mit dem Klinkenelement (20) dreht, so dass das Klinkenelement (20) durch die Zugkraft des Klinkensteuerungshebels (10) freigegeben wird; und
ein Zugseil (23), dessen eines Ende mit dem Joch (14) der Klinkensteuerungshebel (10) verbunden ist und dessen anderes Ende mit dem Schwingteil (22a) der Drehwelle (22) verbunden ist.

2. Tür nach Anspruch 1, ferner umfassend eine Zugeinheit (24) zur Befestigung des Zugseils (23) am Schwingteil (22a).

3. Tür nach Anspruch 1, ferner umfassend:
einen exzentrischen Befestigungsstift (16), der am Scharnierteil (12) gebildet ist; und
ein erstes elastisches Element (15), das fest an dem exzentrischen Befestigungsstift (16) angebracht ist, um den Klinkensteuerungshebel (10) elastisch zu zahlen.

4. Tür nach Anspruch 1, wobei das Schwingteil (22a) der Drehwelle (22) derart gebildet ist, dass es von der Wellenlinie (c) des Klinkenelements (20) in einer "L"-Form vorragt, so dass das Schwingteil (22a) einen Schwingradius (R) bildet, der von einer Wellenlinie (c) des Klinkenelements (20) beabstandet ist.

5. Tür nach Anspruch 1, ferner umfassend einen Haltebügel (25), der an einer Seite des Klinkengehäuses (1) angebracht ist, um eine Befestigungsposition des Zugseils (23) einzustellen.

## Revendications

1. Porte avec un dispositif d'ouverture de porte pour engin de chantier lourd, équipé d'un élément de pêne (20) qui tourne dans un logement de pêne (1) installé sur un côté d'un panneau de porte (8) de la porte, le dispositif d'ouverture de porte comprenant :
un levier de commande du pêne (10) avec une partie de charnière (12) supportée de façon élastique sur un côté d'un cadre supérieur ou d'un cadre inférieur de la porte, une poignée (11) qui s'étend à partir d'un côté de la partie de charnière (12) et un étrier de couplage (14) formé sur l'autre côté de la partie de charnière (12), le levier de commande du pêne (10) exerçant une force de traction sur l'étrier de couplage (14) quand la poignée (11) est tournée autour de la partie de charnière (12) par une force externe ;
un axe rotatif (22) engagé dans l'axe avec l'élément de pêne (20) et possédant une partie pivotante (22a) conçue pour s'étendre vers un côté extérieur de l'élément de pêne (20), l'axe rotatif (22) tournant dans un corps avec l'élément de pêne (20) de telle sorte que l'élément de pêne (20) soit libéré par la force de traction du levier de commande du pêne (10) ; et
un câble de traction (23) dont une extrémité est fixée à l'étrier de couplage (14) du levier de commande du pêne (10) et l'autre extrémité reliée à la partie pivotante (22a) de l'axe rotatif (22).

2. Porte selon la revendication 1, comprenant en outre une unité de traction (24) pour fixer le câble de traction (23) à la partie pivotante (22a).

3. Porte selon la revendication 1, comprenant en outre :
une goupille de fixation excentrique (16) formée sur la partie de charnière (12) ; et
un premier élément élastique (15) installé de façon fixe sur la goupille de fixation excentrique (16) pour supporter de façon élastique le levier de commande du pêne (10).

4. Porte selon la revendication 1, dans laquelle la partie pivotante (22a) de l'axe rotatif (22) est configurée pour dépasser de la ligne d'axe (c) de l'élément de pêne (20) en formant un « L », de sorte que la partie pivotante (22a) forme un rayon de pivotement (R) qui est écarté d'une ligne d'axe (c) de l'élément de pêne (20).

5. Porte selon la revendication 1, comprenant en outre une console de support (25) installée sur un côté du logement de pêne (1) pour définir une position de fixation du câble de traction (23).
